# EUROPEAN PATENT APPLICATION

(11) **EP 4 692 975 A1**
(43) Date of publication of application: **11.02.2026**
(21) Application number: 24895156.8
(22) Date of filing: 17.07.2024
(51) Int. Cl.: G05D 3/12, F16H 1/16

(54) **CONCENTRATED SOLAR POWER SLEW DRIVE AND HELIOSTAT TRACKING SYSTEM**

(30) Priority: 12.06.2024 CN 202421333095 U
(71) Applicant: CHANGZHOU ARCTECH SOLAR NEW ENERGY TECHNOLOGY CO., LTD, Changzhou, Jiangsu 213251 (CN)
(72) Inventor: YU, Zhengming, Changzhou, Jiangsu 213251 (CN); SHEN, Guangsheng, Changzhou, Jiangsu 213251 (CN); MAO, Yongquan, Changzhou, Jiangsu 213251 (CN); LIU, Yongqing, Changzhou, Jiangsu 213251 (CN)
(74) Representative: ABG Intellectual Property Law, S.L.
(86) International application number: PCT/CN2024/105934
(87) International publication number: WO 2025/255899

(57) **Abstract**

A solar thermal rotary drive and a heliostat tracking system are disclosed, comprising a horizontal rotary mechanism and a pitch rotary mechanism. The horizontal rotary mechanism comprises a first housing, and a first worm wheel and a first worm installed therein. The pitch rotary mechanism comprises a second housing, and a second worm wheel and a second worm installed therein. The second housing is fixed to the first worm wheel. When the first worm rotationally drives the first worm wheel, the first worm wheel rotationally drives the pitch rotary mechanism. The first and second worms are horizontal. When the horizontal rotary mechanism and the pitch rotary mechanism are in an initial state, the first and second worms are arranged perpendicularly, facilitating on-site installation and commissioning. The installation direction is better distinguished. Further, the swing amplitude of the wire is smaller, improving the life of the wire.

## Description

### FIELD OF THE DISCLOSURE

The present application relates to the technical field of solar thermal brackets, and in particular to a solar thermal rotary drive and a heliostat tracking system.

### BACKGROUND

A heliostat tracking system is the core of solar thermal power generation. It uses heliostats to track the sun so that its reflected light can be accurately projected onto the heat exchange surface of the absorber placed on the top of the receiving tower. The absorber converts solar energy into thermal energy and heats the medium (water or other fluids) flowing in the coil to produce medium- and high-temperature steam, thereby driving the steam turbine generator assembly to generate electricity.

In the prior art, the heliostat tracking system using a dual-rotary mechanism has two motors that are mostly arranged horizontally and in parallel, which results in the weight of the structure being concentrated on a same side of the column, which is also prone to overloading and tipping. Moreover, the parallel arrangement of two motors is not conducive for the user to distinguish the installation direction, affecting on-site installation and commissioning, and slowing down the installation progress.

Therefore, addressing the technical shortcomings present in the prior art remains an urgent challenge that skilled practitioners in this field must endeavor to resolve.

### SUMMARY OF THE INVENTION

The purpose of this application is to provide a solar thermal rotary drive and a heliostat tracking system, which are more helpful for on-site installation and commissioning, and facilitate users to quickly distinguish the installation direction and speed up the installation progress.

The technical solutions adopted in this disclosure are as follows.

A solar thermal rotary drive, comprising:
a horizontal rotary mechanism and a pitch rotary mechanism; wherein
the horizontal rotary mechanism comprises a first housing, a first worm wheel and a first worm, wherein a first installation cavity having a first opening is formed in the first housing, and the first worm wheel and the first worm are both installed in the first installation cavity, and the first worm wheel and the first worm are connected; and
the pitch rotary mechanism comprises a second housing, a second worm wheel and a second worm, wherein the second housing is installed at the first opening and is fixedly connected to the first worm wheel, and a second installation cavity for installing the second worm wheel and the second worm is formed in the second housing, and the second worm wheel and the second worm are connected; and when the first worm drives the first worm wheel to rotate, the first worm wheel drives the pitch rotary mechanism to rotate;
wherein, the first worm and the second worm are both placed horizontally, and when the horizontal rotary mechanism and the pitch rotary mechanism are in an initial installation state, the first worm and the second worm are perpendicular to each other.

In some embodiments, an annular boss is extended from one side of the first installation cavity, which is away from the first opening, toward the first opening, and the annular boss is inserted into the first worm wheel, and a first bearing is sleeved outside the annular boss, and the first bearing is located between the annular boss and the first worm wheel in a radial direction; and
two ends of the second worm wheel extend to two sides to form rotary shafts respectively; and
two second bearings are arranged in the second installation cavity, and the two second bearings are respectively sleeved on the rotary shafts on both sides of an axial direction of the second worm wheel.

In some embodiments, there are two first bearings, and the two first bearings are respectively arranged on both sides of the first worm wheel in an axial direction, and a third seal is arranged between the two first bearings.

In some embodiments, a first seal is provided between an edge of the first opening and the first worm wheel, and a second seal is provided between the annular boss and the first worm wheel.

In some embodiments, one end of the annular boss facing the first opening is detachably connected to a pressing member, and the pressing member has a pressing edge, and the pressing edge presses the first bearings; and the second seal is located between the pressing edge and the first worm wheel.

In some embodiments, when the horizontal rotary mechanism is in an initial installation state, the first opening of the first housing faces upward.

In some embodiments, the horizontal rotary mechanism further comprises a first motor, wherein a power output shaft of the first motor is drivingly connected to the first worm; and the pitch rotary mechanism further comprises a second motor, wherein a power output shaft of the second motor is drivingly connected to the second worm; and
when the horizontal rotary mechanism and the pitch rotary mechanism are in an initial installation state, the first motor and the second motor are arranged perpendicular to each other.

In some embodiments, the second housing is provided with second openings at both ends in a direction of a rotation axis of the second worm wheel, and the two second openings are each covered with an adapter flange; and
the two adapter flanges are respectively fixedly connected to the rotating shafts on both sides of the axial direction of the second worm wheel, clamping the second worm wheel and the second bearings in the second installation cavity, and a fourth seal is respectively provided between edges of the second openings and the adapter flanges.

In some embodiments, the first housing is provided with a first oil injection hole connected to the first installation cavity at the first worm, and a sealing part is provided at one end of the first oil injection hole away from the first installation cavity; and
the second housing is provided with a second oil injection hole connected to the second installation cavity at the second worm, and a sealing part is provided at one end of the second oil injection hole away from the second installation cavity.

The present application also provides a heliostat tracking system, comprising:
a column, a drive disposed at a top of the column, a main shaft drivingly connected to the drive, and a reflector assembly mounted on the main shaft; wherein the drive is the solar thermal rotary drive in any one of the above embodiments, and the first housing is fixedly connected to the top of the column, and the main shaft is drivingly connected to the pitch rotary mechanism; and
the horizontal rotary mechanism is configured to drive the pitch rotary mechanism, the main shaft and the reflector assembly to rotate around a central axis of the column, and the pitch rotary mechanism is configured to drive the main shaft and the reflector assembly to perform a pitch motion.

The technical effects of this application are:
1. In the present application, when the horizontal rotary mechanism and the pitch rotary mechanism are in the initial installation state, the first worm and the second worm are placed horizontally and perpendicular to each other, which is beneficial to perpendicularly distribute and install the first motor and the second motor, and helps with on-site installation and commissioning, and facilitates to quickly distinguish the installation direction. At the same time, the wire swing amplitude is smaller, which is beneficial to improve the life of the wire.
2. In the present application, the first worm wheel is provided with first bearings on both sides in the axial direction, and the two first bearings form a structure similar to a bearing seat, thereby realizing double-sided support for the first worm wheel, which not only increases the stability of the first worm wheel, but also reduces the difficulty of installation and improves the stability of quality during the production process.
3. The present application configures a first seal and a second seal to form a sealed oil storage space in the first installation cavity for storing lubricating medium, which effectively reduces the risk of leakage, reduces the amount of necessary lubricating medium, and saves costs. In addition, the present application installs the pitch rotary mechanism at the first opening, which can better cover the first seal and the second seal, and prevent the first seal and the second seal from directly contacting the outside world or being directly exposed to the sun, improving the anti-aging ability and service life of the first seal and the second seal, and having a better anti-leakage effect.
4. In the present application, the horizontal rotary mechanism is suitable to be installed on a column, and is used to drive the pitch rotary mechanism and a main shaft connected to the pitch rotary mechanism to rotate around the central axis of the column, thereby changing the azimuth angle of the heliostat tracking system. When the horizontal rotary mechanism is in the initial installation state, the first opening of the first housing faces upward, which facilitates the pitch rotary mechanism to directly connect with the first worm wheel in the first housing, so that the horizontal rotary mechanism drives the pitch rotary mechanism and the main shaft to rotate, and the installation is more convenient and quicker. On the other hand, the lubricating medium in the first installation cavity can be located at the bottom of the first installation cavity due to its own gravity, and is less likely to flow out from the first opening, effectively reducing the risk of leakage.
5. In the present application, the first worm wheel and the first worm, as well as the second worm wheel and the second worm, all adopt a secondary enveloping annular worm transmission structure, which transmits large torques, has a stable efficiency, strong self-locking, and ensures the operating stability of the solar thermal rotary drive.
6. In the present application, the parts used in the entire solar thermal rotary drive are all suitable for mass production, and a large number of standard parts (such as the first worm wheel, the first worm, the first motor, etc.) are used, which effectively reduces the cost of mass production.

### BRIEF DESCRIPTION OF THE DRAWINGS

The present application is further described in detail below with reference to the accompanying drawings and specific implementation methods.
FIG. 1 is a schematic diagram of the three-dimensional structure of a solar thermal rotary drive provided in one embodiment of the present application;
FIG. 2 is a cross-sectional view of the solar thermal rotary drive provided in FIG.1 in one state;
FIG. 3 is a cross-sectional view of the solar thermal rotary drive provided in FIG.1 in another state;
FIG. 4 is a schematic diagram of the three-dimensional structure of a horizontal rotary mechanism provided in one embodiment of the present application;
FIG. 5 is a schematic diagram of the three-dimensional structure of the horizontal rotary mechanism provided in FIG.4 after removing the pressing member;
FIG. 6 is a schematic diagram of the three-dimensional structure of the horizontal rotary mechanism provided in FIG.4 in one state after removing the pressing member and the first housing;
FIG. 7 is a schematic diagram of the three-dimensional structure of the horizontal rotary mechanism provided in FIG.4 in another state after removing the pressing member and the first housing.

Description of reference numbers:
100, horizontal rotary mechanism; 110, first housing; 111, first installation cavity; 112, annular boss; 113, first oil injection hole; 120, first worm wheel; 130, first worm; 140, first motor; 150, first seal; 160, second seal; 170, first bearing; 180, pressing member; 181, pressing edge; 190, third seal;
200, pitch rotary mechanism; 210, second housing; 211, second installation cavity; 212, first sub-housing; 213, second sub-housing; 214, fifth seal; 215, second oil injection hole; 220, second worm wheel; 230, second worm; 240, second motor; 250, second bearing; 260, adapter flange; 270, fourth seal;
300, sealing part.

### DESCRIPTION OF THE ILLUSTRATED EMBODIMENTS

In the following description, specific details such as specific system structures, technologies, etc. are provided for the purpose of illustration rather than limitation, so as to provide a thorough understanding of the embodiments of the present application. However, it should be clear to those skilled in the art that the present application may also be implemented in other embodiments without these specific details. In other cases, detailed descriptions of well-known systems, devices, circuits, and methods are omitted to prevent unnecessary details from obstructing the description of the present application.

In order to more clearly illustrate the embodiments of the present application or the technical solutions in the prior art, the specific implementation methods of the present application will be described below with reference to the accompanying drawings. Obviously, the drawings described below are only some embodiments of the present application. For ordinary technicians in this field, other drawings and other implementation methods can be obtained based on these drawings without creative work.

The present application is schematically shown in each figure, and they do not represent the actual structure of products. In addition, in order to simplify the drawings and facilitate understanding, in some figures, only one of the parts with a same structure or function is schematically drawn or marked.

In this document, it should be noted that, unless otherwise clearly specified and limited, the term "connection" should be understood in a broad sense. For example, it can be a fixed connection, or a detachable connection, or an integral connection; or it can be a mechanical connection, or it can be an electrical connection; or it can be a direct connection, or it can be indirectly connected through an intermediate medium. For ordinary technicians in this field, the specific meanings of the above terms in this application can be understood according to specific circumstances.

In the embodiments shown in the drawings, directional indications (such as up, down, left, right, front, and back, etc.) are not absolute but relative when describing the structure and movement of each component, and are not used to limit the direction of the product in actual use.

In addition, in the description of the present application, ordinal numbers, such as "first", "second", etc., are only used to distinguish and describe related objects, and cannot be understood as indicating or implying the relative importance or order between the related objects.

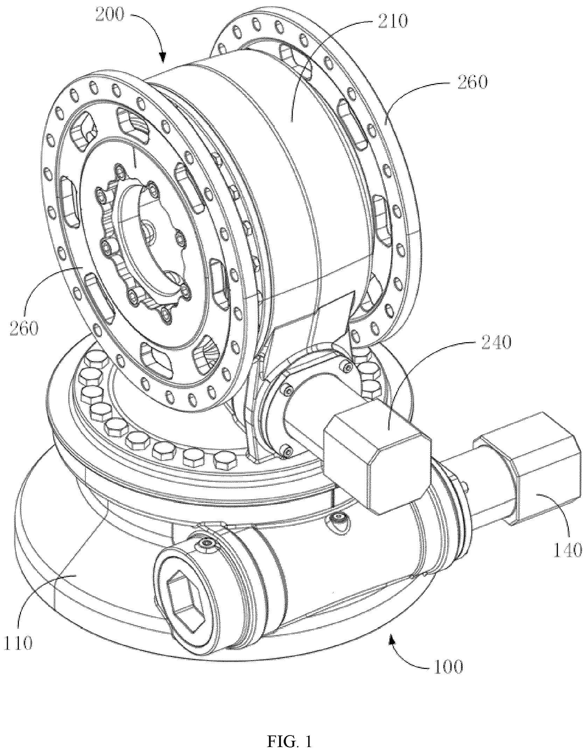

According to an example embodiment provided by the present application, referring to FIGS. 1 to 3, a solar thermal rotary drive comprises a horizontal rotary mechanism 100 and a pitch rotary mechanism 200. The horizontal rotary mechanism 100 is installed at the top of a column, and the pitch rotary mechanism 200 is installed above the horizontal rotary mechanism 100 for docking the main shaft. When the horizontal rotary mechanism 100 is in operation, the pitch rotary mechanism 200 and the main shaft thereon will be driven to rotate around the central axis of the column, thereby changing the azimuth angle of the reflector assembly on the main shaft. When the pitch rotary mechanism 200 is in operation, the column and the horizontal rotary mechanism 100 are not affected, and the pitch rotary mechanism 200 only drives the main shaft to rotate around its own central axis, thereby changing the pitch angle of the reflector assembly on the main shaft.

In this embodiment, the horizontal rotary mechanism 100 may specifically comprise a first housing 110, a first worm wheel 120 and a first worm 130. A first installation cavity 111 having a first opening is formed in the first housing 110. The first worm wheel 120 and the first worm 130 are both installed in the first installation cavity 111, and the first worm wheel 120 and the first worm 130 are connected. At this point, the pitch rotary mechanism 200 is preferably installed at the first opening of the first housing 110 and fixedly connected to the first worm wheel 120. In this way, when the first worm 130 drives the first worm wheel 120 to rotate, the first worm wheel 120 can drive the pitch rotary mechanism 200 to rotate accordingly.

Specifically, referring to FIG. 1 to FIG. 3, the pitch rotary mechanism 200 may specifically comprise a second housing 210, a second worm wheel 220 and a second worm 230, wherein the second worm wheel 220 and the second worm 230 are connected, and the second housing 210 is fixedly connected to the first worm wheel 120, and a second installation cavity 211 for installing the second worm wheel 220 and the second worm 230 is formed in the second housing 210, and the first worm 130 and the second worm 230 are both placed horizontally. In the initial installation state of the horizontal rotary mechanism 100 and the pitch rotary mechanism 200, the first worm 130 and the second worm 230 are arranged perpendicularly.

In the prior art, the two worms in the solar thermal rotary drive using a dual rotary mechanism (horizontal rotary mechanism 100 plus pitch rotary mechanism 200) are mostly arranged horizontally and in parallel, resulting in the structural weight being concentrated on a same side of a column. In this embodiment, the first worm 130 and the second worm 230 provided by the horizontal rotary mechanism 100 and the pitch rotary mechanism 200 in the initial installation state are arranged horizontally and perpendicular to each other, and weight is more distributed, so that the solar thermal rotary drive has a stronger anti-overturning ability, is stable and reliable, and has a longer service life. In addition, the perpendicularly distributed installation of the first motor 140 and the second motor 240 also facilitates on-site installation and commissioning, and facilitates users to quickly distinguish the installation direction.

Specifically, referring to FIG. 1, the horizontal rotary mechanism 100 further comprises a first motor 140, which is preferably a brushless DC reduction motor, and its power output shaft is drivingly connected to the first worm 130. The input power is transmitted to the first worm 130 from the first motor 140 after being reduced, and the first worm 130 drives the first worm wheel 120 and the pitch rotary mechanism 200 to rotate around the central axis of the column, thereby driving the reflector assembly in the heliostat tracking system to rotate around the central axis of the column. Correspondingly, the pitch rotary mechanism 200 further comprises a second motor 240, which is preferably a brushless DC reduction motor, and the power output shaft of the second motor 240 is drivingly connected to the second worm 230. The input power is transmitted to the second worm 230 from the second motor after being reduced, and the second worm 230 drives the second worm wheel 220 to rotate, and the second worm wheel 220 drives the main shaft to rotate, thereby driving the reflector assembly to rotate around the central axis of the main shaft.

The first motor 140 and the second motor 240 may be in operation at the same time.

Preferably, at most one of the first motor 140 and the second motor 240 is in operation at a time. That is, when the solar thermal rotary drive is driven, only one motor is in operation and the other motor is stationary. This configuration can further improve the anti-overturning capability of the solar thermal rotary drive.

Moreover, compared to the situation where both motors are running, the solar thermal rotary drive provided in this embodiment has a smaller wire swing amplitude during driving, and only a single wire swings within the range of ±90°, so the wire is not easily worn and has a longer service life; while when both motors are running, both wires need to move, and the wires are more easily worn and consumed, and have a shorter service life.

In a specific embodiment, an annular boss 112 extends from one side of the first installation cavity 111, which is away from the first opening, toward the first opening, and the annular boss 112 is inserted into the first worm wheel 120. A first seal 150 is provided between the edge of the first opening and the first worm wheel 120, and a second seal 160 is provided between the annular boss 112 and the first worm wheel 120.

In this embodiment, by disposing a first seal 150 between the edge of the first opening and the first worm wheel 120, and disposing a second seal 160 between the annular boss 112 and the first worm wheel 120, it is beneficial to form a sealed oil storage space in the first installation cavity 111 for storing lubricating medium, which is beneficial to full utilization and effective sealing of the lubricating medium, thereby reducing costs and extending maintenance intervals.

In addition, in this embodiment, the pitch rotary mechanism 200 is installed at the first opening of the first housing 110, which can shield the first seal 150 at the first opening and the second seal 160 at the annular boss 112, preventing the first seal 150 and the second seal 160 from directly contacting the outside world or being directly exposed to the sun, effectively improving the anti-aging ability and service life of the first seal 150 and the second seal 160, further reducing the risk of leakage, and the structural setting is more reasonable and practical. In the prior art, in a heliostat tracking system using a dual rotary mechanism, the housing of the horizontal rotary mechanism is usually installed with a downward opening, and then sealed by a seal to avoid leakage. But during long-term operation, with the influence of strong winds, the sealing structure thereon is prone to aging and wear, which will produce gaps, resulting in an increased risk of leakage.

In this embodiment, a first opening is opened at the top of the first housing 110 to form a housing structure with the opening facing upward, which is beneficial for the pitch rotary mechanism 200 above the horizontal rotary mechanism 100 to directly connect with the first worm wheel 120 in the first housing 110 through the first opening, making the installation more convenient and quicker.

Moreover, considering that the lubricating medium is more likely to be at the bottom of the first installation cavity 111 under the action of gravity, the first opening in this embodiment is located above the first housing 110. Compared with the structural configuration in the prior art in which the first opening is opened at the bottom, the lubricating medium in this embodiment is less likely to leak from the first opening, and the leakage prevention effect is better.

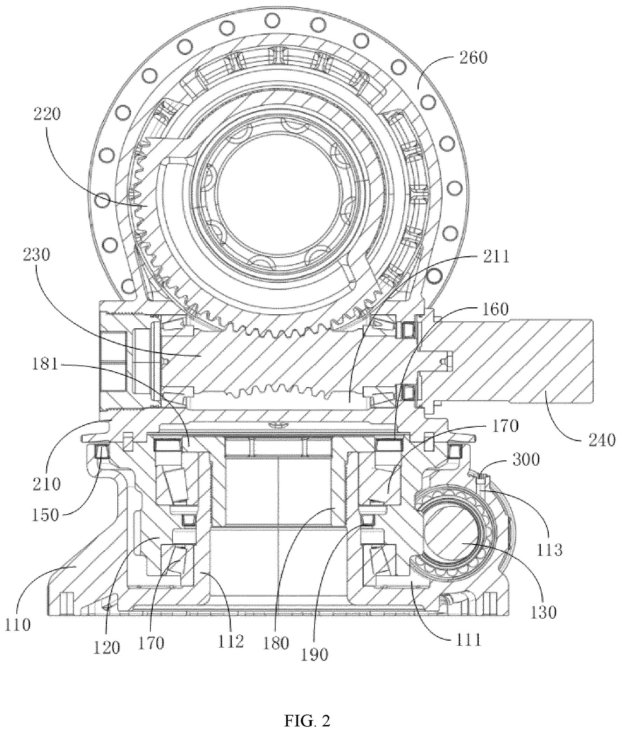

Specifically, referring to FIG. 2, the first housing 110 is provided with a first oil injection hole 113 connected to the first installation cavity 111 at the first worm 130, and the user can inject lubricating medium into the first worm wheel 120 and the first worm 130 through the first oil injection hole 113 to ensure the stable operation of the horizontal rotary mechanism 100. A sealing part 300 is provided at one end of the first oil injection hole 113 away from the first installation cavity 111, so that after the user injects the lubricating medium, the oil storage space can be maintained in a sealed state to ensure the effective sealing of the lubricating medium.

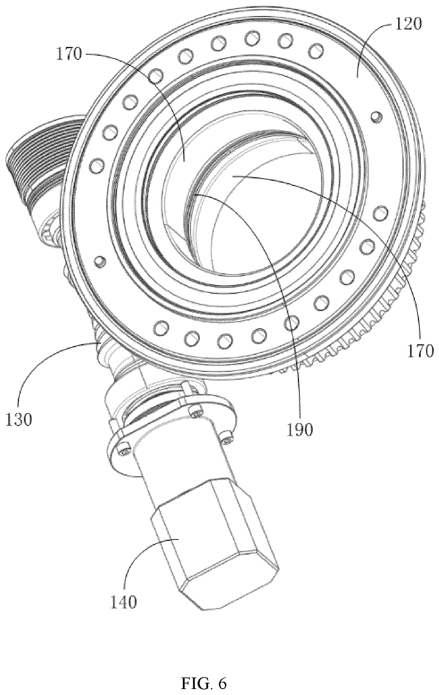

Preferably, referring to FIGS. 2, 3 and 6, a first bearing 170 is also provided on the outside of the annular boss 112. The first bearing 170 is located radially between the annular boss 112 and the first worm wheel 120, which is beneficial for the first worm wheel 120 to rotate more stably and smoothly, thereby effectively improving the driving effect of the solar thermal rotary drive on the reflector assembly, so that the reflector assembly can rotate more stably and smoothly to a desired azimuth angle, which is beneficial to improving the control reliability of the solar thermal rotary drive and has strong practicality.

Furthermore, there are two first bearings 170, which are respectively arranged at the two ends of the first worm wheel 120 in the axial direction, forming a structure similar to a bearing seat, thereby realizing double-sided support for the first worm wheel 120. Compared with the common single-sided support in the prior art, it not only further increases the stability of the first worm wheel 120, but also reduces the difficulty of installing the first worm wheel 120, thereby improving the stability of quality in the production process and having strong practicality.

Preferably, the two first bearings 170 are both tapered roller bearings which are used in pairs. The horizontal rotary mechanism of existing solar thermal rotary drives generally chooses to use single-sided supports such as rotary bearings and wire raceway bearings, which usually cause biased loads, and the tapered roller bearings used in pairs may well avoid this problem. Tapered roller bearings are separable bearings. Generally, the outer rings and inner components of tapered roller bearings of different sizes are 100% interchangeable, which is conducive to installation, disassembly and maintenance. At the same time, tapered roller bearings also have the advantages of reliable operation, long service life, compact structure, high load-bearing capacity, and lifetime lubrication, which are conducive to the long-term stable operation of the first worm wheel 120.

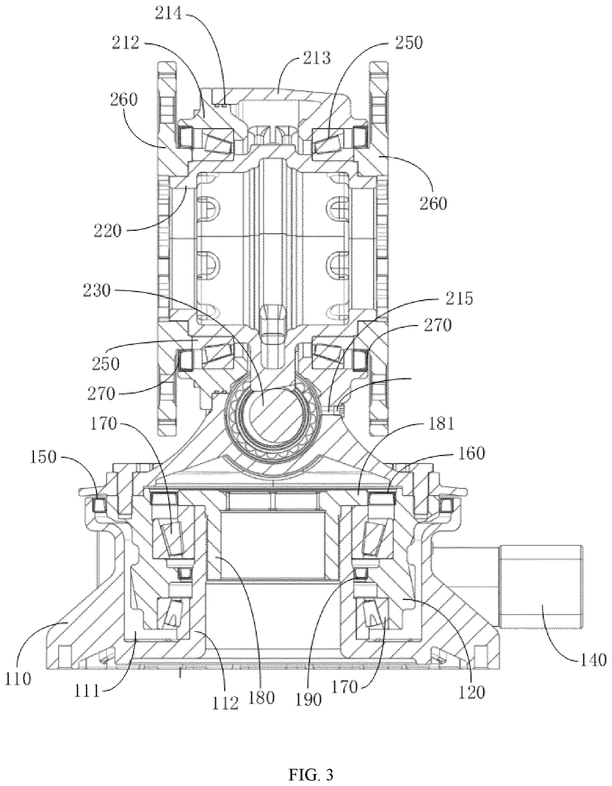

In an exemplary embodiment, referring to FIG. 2 and FIG. 3, a third seal 190 is further provided between the two first bearings 170. Specifically, a boss is provided on the inner wall surface of the first worm wheel 120, and the two first bearings 170 are respectively pressed against the two ends of the boss in the axial direction of the first worm wheel 120, and the third seal 190 is provided between the boss and the annular boss 112.

In this embodiment, the third seal 190 separates the two first bearings 170 located at both ends of the first worm wheel 120 in the direction of the rotating axis, each forming an independent chamber, which is lubricated separately without interfering with each other, thereby preventing the lubricating medium on the first bearing 170 located at the upper end of the first worm wheel 120 from being lost to the lower part of the first installation cavity 111 under the action of gravity, and causing the first bearing 170 located at the upper end of the first worm wheel 120 to lose lubrication due to the loss of lubricating medium. In addition, each cavity is lubricated separately, which greatly reduces the amount of grease used, and also ensures that the lubrication in each cavity is fully utilized and effectively sealed, thereby reducing costs and extending the maintenance-free time.

In addition, the third seal 190 in this embodiment is also under the cover of the pitch rotary mechanism 200, and will not be directly in contact with the outside world or directly exposed to the sun. It has strong anti-aging ability and longer service life, effectively reducing the risk of leakage, and the structural configuration is more reasonable and practical.

Specifically, an opening matching with the pressing member 180 is provided at one end of the annular boss 112 facing the first opening. The pressing member 180 is detachably connected to the annular boss 112 and has a pressing edge 181 that can press the first bearings 170 in the first installation cavity 111 to fix the position of the first bearings 170.

In this embodiment, the pressing member 180 and the annular boss 112 are threadedly matched, and the first bearings 170, the first worm wheel 120 and the first housing 110 can be fixed by tightening the pressing member 180 to the annular boss 112, which is easy to operate.

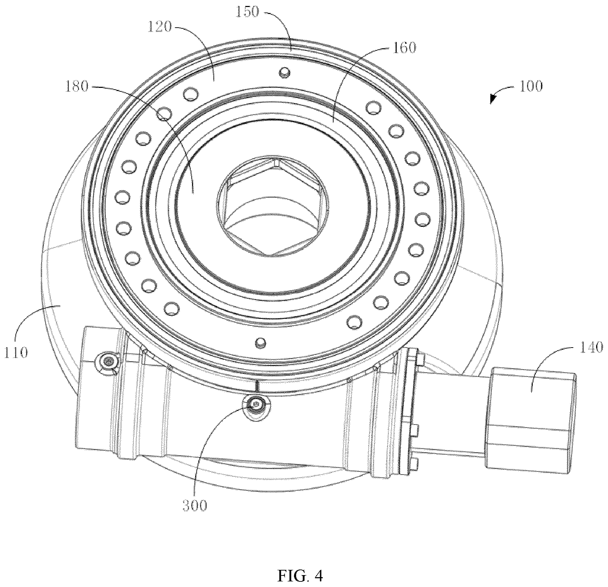

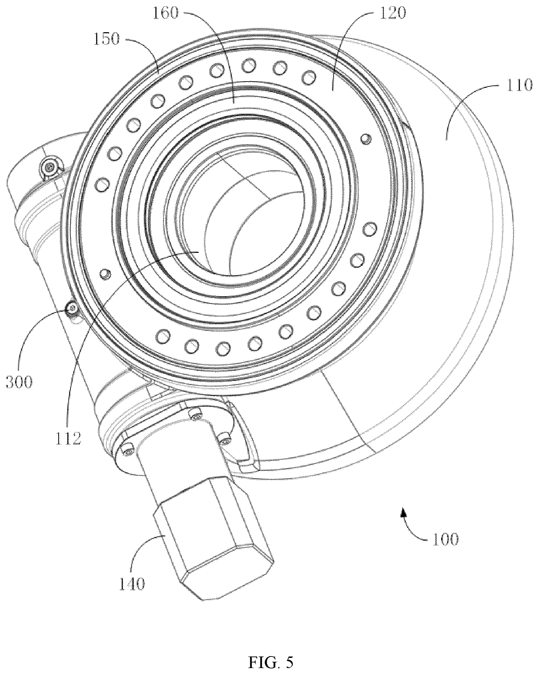

Referring to FIG. 2 to FIG. 5, in order to ensure the sealing of the horizontal rotary mechanism 100, the first seal 150 is arranged between the edge of the first opening and the first worm wheel 120, and the second seal 160 is arranged between the pressing edge 181 and the first worm wheel 120. At this point, the first worm wheel 120 and the first housing 110 have two sealing structures, forming a double seal, and the sealing effect is better. Moreover, the first seal 150 and the second seal 160 in this embodiment are also under the shielding of the pitch rotary mechanism 200, and will not directly contact the outside world, nor will they be directly exposed to the sun, and have strong anti-aging ability and longer service life, which better reduces the risk of leakage of the first housing 110, and the structural setting is more reasonable and practical.

Preferably, referring to FIG. 3, a second bearing 250 is provided in the second installation cavity 211, and the second bearing 250 is sleeved onto the second worm wheel 220. In this embodiment, the second bearing 250 is located between the second worm wheel 220 and the second housing 210, and can provide radial support for the second worm wheel 220, and make the second worm wheel 220 rotate more stably and smoothly, thereby effectively improving the driving effect of the solar thermal rotary drive on the reflector assembly, so that the reflector assembly can rotate more stably and smoothly to the required pitch angle, which is conducive to improving the control reliability of the solar thermal rotary drive and has strong practicality.

Furthermore, there are two second bearings 250, and the two ends of the second worm wheel 220 extend to form rotary shafts at both sides. At this point, the two second bearings 250 are respectively sleeved onto the rotary shafts on both sides of the second worm wheel 220 in the axial direction, realizing double-sided support for the second worm wheel 220. Compared with the common single-sided support in the prior art, it not only further increases the stability of the second worm wheel 220, but also reduces the difficulty of installing the second worm wheel 220, improves the stability of quality in the production process, and has strong practicality.

Preferably, the two second bearings 205 are tapered roller bearings which are used in pairs. Tapered roller bearings are separable bearings. Generally, the outer rings and inner components of tapered roller bearings of different sizes are 100% interchangeable, which is convenient for installation, disassembly and maintenance. At the same time, tapered roller bearings also have the advantages of reliable operation, long service life, compact structure, high bearing capacity, lifelong lubrication, etc., which are conducive to the long-term stable operation of the second worm wheel 220.

Specifically, referring to FIG. 3, the second housing 210 is provided with second openings at both ends in the direction of the rotation axis of the second worm wheel 220, and both second openings are covered with adapter flanges 260. The two adapter flanges 260 are respectively fixedly connected to the rotary shafts on both sides of the axial direction of the second worm wheel 220, clamping the second worm wheel 220 and the second bearings 250 in the second installation cavity 211, and fourth seals 270 are provided between the edges of the second openings and the adapter flanges 260.

In this embodiment, by arranging the fourth seals 270 at the two second openings of the second housing 210 and covering them with the adapter flanges 260, a sealed oil storage space can be formed in the second installation cavity 211 for storing the lubricating medium, which is beneficial to the full utilization and effective sealing of the lubricating medium, thereby reducing costs and extending maintenance intervals.

Specifically, the second housing 210 is provided with a second oil injection hole 215 at the second worm 230, which is connected to the second installation cavity 211. The user can inject lubricating medium into the second worm wheel 220 and the second worm 230 through the first oil injection hole 113 to ensure the stable operation of the pitch rotary mechanism 200. A sealing part 300 is provided at one end of the second oil injection hole 215 away from the second installation cavity 211, so that after the user injects the lubricating medium, the oil storage space can be maintained in a sealed state, ensuring the effective sealing of the lubricating medium.

In this embodiment, the horizontal rotary mechanism 100 and the pitch rotary mechanism 200 have independent chambers that are lubricated separately without interfering with each other, which can ensure full utilization and effective sealing of the internal lubricating medium, thereby reducing costs and extending the maintenance-free time.

Preferably, the lubricating medium used by the horizontal rotary mechanism 100 and the pitch rotary mechanism 200 is grease. The use of grease lubrication can greatly save the amount of lubricating medium, further reduce costs, and reduce material consumption.

In a specific embodiment, the adapter flanges 260 are used to externally connect one or more main shafts and are directly locked to the second worm wheel 220. When the second worm 230 drives the second worm wheel 220 to rotate, the second worm wheel 220 will drive the adapter flanges 260 to rotate accordingly, thereby driving the main shafts connected to the adapter flanges 260 to rotate to change the pitch angle of the reflector assembly.

Specifically, referring to FIG. 3, the second housing 210 comprises a first sub-housing 212 and a second sub-housing 213, and the first sub-housing 212 and the second sub-housing 213 are sequentially distributed along the rotation axis of the second worm wheel 220. The second housing 210 adopts a split structure, which is more conducive to structural assembly by users and is easy to install parts. In order to ensure that the second installation cavity 211 has good sealing performance, a fifth seal 214 is provided between the first sub-housing 212 and the second sub-housing 213.

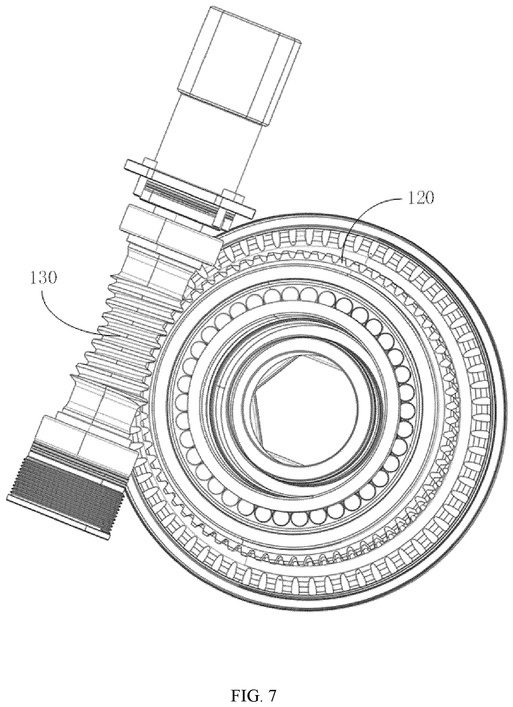

As a preference, referring to FIG. 2 and FIG. 7, in all the above embodiments, the first worm wheel 120 and the first worm 130 adopt a secondary enveloping toroidal worm transmission structure. The secondary enveloping toroidal worm transmission structure refers to a device that applies a planar secondary enveloping curve to the tooth profile configuration of an annular worm wheel, and realizes transmission through the meshing of a multi-blade annular worm and annular worm wheel. A planar secondary enveloping curve refers to a moving point moving along a fixed curve in a plane, while keeping the distance from the point equal to the perpendicular distance from the corresponding point on another fixed curve to the plane. The trajectory formed during this movement is the planar secondary enveloping curve. The secondary enveloping toroidal worm transmission structure makes the gear transmission more stable and can reduce noise and wear because the tooth profile corresponds the planar secondary enveloping curve. In addition, it can also achieve high-efficiency speed conversion and torque transmission, improving the control accuracy of the solar thermal rotary drive, and achieving a control accuracy between 0.3-0.8mrad. At the same time, it has a compact structure and occupies a small space, which is suitable for application scenarios in limited spaces. More importantly, due to the characteristics of the secondary enveloping curve, the secondary enveloping toroidal worm transmission structure has a two-way self-locking function, which can stably maintain the reflector assembly in a certain position to prevent reversal.

Correspondingly, the second worm wheel 220 and the second worm 230 preferably adopt a secondary enveloping toroidal worm transmission structure, which has a more stable transmission, can achieve efficient speed conversion and torque transmission, and improve the control accuracy of the solar thermal rotary drive. At the same time, it has a compact structure and occupies a small space, and is suitable for application scenarios in limited spaces. More importantly, the secondary enveloping toroidal worm transmission structure has a two-way self-locking function, which can stably maintain the reflector assembly in a certain position to prevent reversal.

The parts involved in the above-mentioned embodiments are all standard products, and the core components are the worms, the worm wheels, the housings, etc., which can effectively adapt to mass production and installation and reduce production costs.

The present application adopts standard bearings and changes the conventional installation method of the bearing, that is, the first worm wheel 120 is provided with bearings on both the upper and lower sides, so that the first housing 110 is formed as a bearing seat as a whole, which not only increases stability, but also reduces the difficulty of installation, so that the stability of quality has a certain improvement. In addition, when the solar thermal rotary drive is in the initial installation state, the first motor 140 and the second motor 240 are installed in a perpendicular distribution. When the solar thermal rotary drive is driven, one motor is stationary and the other motor is in motion. The unique structure can ensure that the drive has a stronger anti-overturning ability. In the design process, the leakage risk of the solar thermal rotary drive is also fully considered, and the sealing position of the horizontal rotary mechanism 100 is configured at an upper position, which reduces the occurrence of leakage as much as possible, and the structural configuration is more reasonable. Moreover, the transmission structure of the solar thermal rotary drive provided in the present application is simple, the stability is high, the accuracy can be controlled between 0.3-0.8mrad, and it can be mass-produced according to actual needs, and thus is highly practical.

The present application also provides a heliostat tracking system, comprising a column, a drive disposed at the top of the column, a main shaft connected to the drive, and a reflector assembly mounted on the main shaft. The drive is the solar thermal rotary drive provided in any of the above embodiments, wherein the first housing 110 thereon is fixedly connected to the top of the column, and the main shaft is connected to the pitch rotary mechanism 200. At this point, the horizontal rotary mechanism 100 can be used to drive the pitch rotary mechanism 200, the main shaft and the reflector assembly to rotate around the central axis of the column, and the pitch rotary mechanism 200 can be used to drive the main shaft and the reflector assembly to perform pitch motion. In this way, by controlling the operation of the horizontal rotary mechanism 100 and the pitch rotary mechanism 200, the reflector assembly can be driven toward the molten salt tower to generate electricity, with high control accuracy and good stability, which is conducive to the long-term stable operation of the heliostat tracking system.

In the above embodiments, the description of each embodiment has its own emphasis. For parts that are not described or recorded in detail in a certain embodiment, reference can be made to the relevant descriptions of other embodiments.

It should be noted that the above embodiments can be freely combined as needed. The above are only preferred implementations of the present application. It should be pointed out that for ordinary technicians in this technical field, several improvements and modifications can be made without departing from the principles of the present application, and these improvements and modifications should also be regarded as the protection scope of the present application.

## Claims

1. A solar thermal rotary drive, **characterized by** comprising:
a horizontal rotary mechanism and a pitch rotary mechanism; wherein
the horizontal rotary mechanism comprises a first housing, a first worm wheel and a first worm, wherein a first installation cavity having a first opening is formed in the first housing, and the first worm wheel and the first worm are both installed in the first installation cavity, and the first worm wheel and the first worm are connected; and
the pitch rotary mechanism comprises a second housing, a second worm wheel and a second worm, wherein the second housing is installed at the first opening and is fixedly connected to the first worm wheel, and a second installation cavity for installing the second worm wheel and the second worm is formed in the second housing, and the second worm wheel and the second worm are connected; and when the first worm drives the first worm wheel to rotate, the first worm wheel drives the pitch rotary mechanism to rotate;
wherein, the first worm and the second worm are both placed horizontally, and when the horizontal rotary mechanism and the pitch rotary mechanism are in an initial installation state, the first worm and the second worm are perpendicular to each other.

2. The solar thermal rotary drive as claimed in claim 1, **characterized in that**:
an annular boss is extended from one side of the first installation cavity, which is away from the first opening, toward the first opening, and the annular boss is inserted into the first worm wheel, and a first bearing is sleeved outside the annular boss, and the first bearing is located between the annular boss and the first worm wheel in a radial direction; and
two ends of the second worm wheel extend to two sides to form rotary shafts respectively; and
two second bearings are arranged in the second installation cavity, and the two second bearings are respectively sleeved on the rotary shafts on both sides of an axial direction of the second worm wheel.

3. The solar thermal rotary drive as claimed in claim 2, **characterized in that**:
there are two first bearings, and the two first bearings are respectively arranged on both sides of the first worm wheel in an axial direction, and a third seal is arranged between the two first bearings.

4. The solar thermal rotary drive as claimed in claim 3, **characterized in that**:
a first seal is provided between an edge of the first opening and the first worm wheel, and a second seal is provided between the annular boss and the first worm wheel.

5. The solar thermal rotary drive as claimed in claim 4, **characterized in that**:
one end of the annular boss facing the first opening is detachably connected to a pressing member, and the pressing member has a pressing edge, and the pressing edge presses the first bearings; and the second seal is located between the pressing edge and the first worm wheel.

6. The solar thermal rotary drive as claimed in claim 1, **characterized in that**:
when the horizontal rotary mechanism is in the initial installation state, the first opening of the first housing faces upward.

7. The solar thermal rotary drive as claimed in claim 1, **characterized in that**:
the horizontal rotary mechanism further comprises a first motor, wherein a power output shaft of the first motor is drivingly connected to the first worm; and the pitch rotary mechanism further comprises a second motor, wherein a power output shaft of the second motor is drivingly connected to the second worm; and
when the horizontal rotary mechanism and the pitch rotary mechanism are in the initial installation state, the first motor and the second motor are arranged perpendicular to each other.

8. The solar thermal rotary drive as claimed in claim 2, **characterized in that**:
the second housing is provided with second openings at both ends in a direction of a rotation axis of the second worm wheel, and the two second openings are each covered with an adapter flange; and
the two adapter flanges are respectively fixedly connected to the rotating shafts on both sides of the axial direction of the second worm wheel, clamping the second worm wheel and the second bearings in the second installation cavity, and a fourth seal is respectively provided between edges of the second openings and the adapter flanges.

9. The solar thermal rotary drive as claimed in claim 1, **characterized in that**:
the first housing is provided with a first oil injection hole connected to the first installation cavity at the first worm, and a sealing part is provided at one end of the first oil injection hole away from the first installation cavity; and
the second housing is provided with a second oil injection hole connected to the second installation cavity at the second worm, and a sealing part is provided at one end of the second oil injection hole away from the second installation cavity.

10. A heliostat tracking system, **characterized by** comprising:
a column, a drive disposed at a top of the column, a main shaft drivingly connected to the drive, and a reflector assembly mounted on the main shaft;
wherein the drive is the solar thermal rotary drive as claimed in any one of claims 1 to 9, and the first housing is fixedly connected to the top of the column, and the main shaft is drivingly connected to the pitch rotary mechanism; and
the horizontal rotary mechanism is configured to drive the pitch rotary mechanism, the main shaft and the reflector assembly to rotate around a central axis of the column, and the pitch rotary mechanism is configured to drive the main shaft and the reflector assembly to perform a pitch motion.
